# EUROPEAN PATENT APPLICATION

(11) **EP 4 782 196 A1**
(43) Date of publication of application: **29.07.2026**
(21) Application number: 25214511.5
(22) Date of filing: 10.11.2025
(51) Int. Cl.: B31D 5/00, B31F 7/00, B26D 3/16, B26D 7/00, B26D 7/01, B31F 1/00, B26D 1/04, A47G 21/18, B29C 67/00

(54) **A DEVICE AND A METHOD FOR SHAPING THE TIP OF TUBULAR STRAWS IN A CONTINUOUS PRODUCTION**

(30) Priority: 23.01.2025 EP 25153602
(71) Applicant: Tetra Laval Holdings & Finance S.A., 1009 Pully (CH)
(72) Inventor: LINDÉN, Staffan, 221 86 Lund (SE)
(74) Representative: Tetra Pak Patent Attorneys

(57) **Abstract**

The disclosure relates to a device (1) for shaping the tip (11) of tubular straws (10) in a continuous production, the device comprising: a first body (20) that may be substantially cylindrical and arranged to rotate around a rotation axis (26); a plurality of support members (21), wherein each support member may be configured to support one tubular straw (10) in a fixed position, wherein the plurality of support members (21) is attached the first body (20); a second body (30) comprising a first clamp (31) and a second clamp (32) for receiving, compressing and shaping a tip portion (12) of a straw (10); and a cutting element for removing a part (13) of the compressed tip portion (12) of the straw (10), wherein the cutting element may be arranged to cut the tip portion (12) of the straw (10) in a predefined angle to the length direction of the straw (10). The disclosure further relates to a method for shaping the tip (11) of tubular straws (10) in a continuous production.

## Description

### Technical field

The present disclosure relates to a device for shaping the tip of tubular straws in a continuous production and a method for shaping the tip of tubular straws in a continuous production. More specifically, the disclosure relates to a device for shaping the tip of tubular straws in a continuous production and a method for shaping the tip of tubular straws in a continuous production as defined in the introductory parts of the independent claims.

### Background art

Drinking straws are an integral part of beverage industries, allowing a user to drink beverages and similar drinks with ease. To meet the demand of the industry drinking straws are made in huge quantity. Plastic material being the most preferred material for making these straws.

Use of paper or similar materials like fiber based and/or cellulose based for making drinking straws is also known in the field. These straws are being used in all type of beverage drinks served in various packaging such carton type packaging. These boxes include dedicated slots that allows the straw to be inserted in the carton. These slots generally are covered with sealing member that needs to be poked in by the straw. The straws are usually provided with a pointed tip to allow the straw to puncture the seal during poking. Further, the straws are conventionally manufactured using automated machines provided in a manufacturing line. These machines produce large quantity of paper-based straws in simple manner.

A problem with the manufacturing of drinking straws made with paper or similar materials of the prior known manufacturing process may be that the straws lack consistency, are generally not possessing high rigidity leading collapse of the straws and in some cases, there are issues pertaining to deformation of the straw. The machines used in the manufacturing process for this paper based straw lack provisions to effectively shape the tip of the drinking straw to ensure proper rigidity and shape of the straw. Further, the prior known methods of shaping the straws are not effectively integrated in the manufacturing lines, therefore, increasing the production time leading to less effective manufacturing. There may be thus a need for improved drinking straw making machine/device that can effectively shape the tip of drinking straw, and that may be integral with the manufacturing line in producing straws in a continuous manner.

### Summary

It may be an object of the present disclosure to mitigate, alleviate or eliminate one or more of the above-identified deficiencies and disadvantages in the prior art and solve at least the above-mentioned problem. According to a first aspect there may be provided a device for shaping the tip of tubular straws in a continuous production, the device comprising: a first body that may be substantially cylindrical and arranged to rotate around a rotation axis; a plurality of support members, wherein each support member may be configured to support one tubular straw in a fixed position, wherein the plurality of support members is attached to the first body ; a second body comprising a first clamp and a second clamp for receiving and compressing a tip portion of a straw for shaping and a cutting element for removing a part of the compressed tip portion of the straw, wherein the cutting element may be arranged to cut the tip portion of the straw in a predefined angle to the length direction of the straw. The device improves the manufacturing process of drinking straw to ensure that an improved tip-shape of the straw may be achieved in a continuous manner. Further, the device enables to fit the tip forming mechanism into a continuously straw producing machine, where space may be very limited; and the device allow usage of paper or to be able to use thinner straw material/walls. In addition, the improved tip-shape of the straw produced by the device increases the strength of the tip of the straw. So that, it either reduces the opening force of the packages with standard foil sealing in the straw hole on the package or makes easier to punch sealing using a non-foil packaging material (for instance polymer-based barrier or paper-based barrier) with the straw. The tubular straw may be preferably a drinking straw. In other words, the cutting element cuts the tip portion of the straw along a cutting plane forming an acute angle with the longitudinal axis of the tubular straw. The cutting element may be for instance preferably a knife; however, other known suitable cutting elements can also be used, like laser etc.

According to some embodiments, the first clamp comprises a first slot and the second clamp comprises a second slot, wherein the first slot and the second slot are jointly arranged to allow the cutting element to cut in the predetermined angle when the first slot and the second slot are in the compressed position compressing the tip portion of the straw. By the allowance of the slots, the knife can pass within and through the slots. The embodiment of the present invention allows a precise angle of the knife with respect to the straw to give the straw an optimal shape while having strong and rigid tip for penetrating a packing material.

According to some embodiments, angle may be 30-60 degrees. The embodiments allow to create a straw tip for penetrating a beverage package.

According to some embodiments, the plurality of support members is rotatably attached to the first body, wherein each support member may be arranged to rotate around a support member axis. The feature of the device disclosed in the embodiment, enables the straw to be rotated to a desired rotation angle. Allowing choosing a rotation in relation to the U-bend that may be optimal for the attachment of the straw to a package, e.g. for protecting the tip from damage during transportation and preserving the function of the shaped tip.

The tubular section of a U-bend straw that has the tip portion to be shaped may be positioned concentrically with the support member axis on the support member so that the tubular section may be rotated when the support member is rotated to move the straw into a position between the first clamp and the second clamp. The feature of the device disclosed in the embodiment, enables the straw to be rotated in between the clamps. In addition, allowing choosing a rotation in relation to the U-bend that may be optimal for the attachment of the straw to a package, e.g. for protecting the tip from damage during transportation and preserving the function of the shaped tip.

According to some embodiments, the support member may be rotated 0-110 degrees. The feature of the device disclosed in the embodiment, enables the cut straw tip penetrating end of the straw aligned well with the bend. For instance, a direction perpendicular to the cutting plane that the cutting element cuts the shaped tip portion is parallel to a plane on that a U-bend straw lies in bended form.

According to some embodiments, the first clamp and the second clamp are arranged to compress and permanently deform the tip portion of the straw. The feature of the device disclosed in the embodiment enables strengthening the tip of the straw. For instance, the first clamp and the second clamp may deform the tip portion by applying pressure on the tip portion of the tubular straw. This pressure may create a bending line such that the pointed tip of said tip portion piercing the package may be located on the bending line to increase stiffness of the tip portion, for instance like only to increase stiffness of the tip portion.

According to some embodiments, the first clamp and the second clamp are shaped to permanently deform the tip portion of the straw so that the straw may be provided with one rib defined by a bend line. The feature of the device disclosed in the embodiment, outward extending rib to strengthen the pointed tip to help it penetrate a beverage package material, therefore providing additional strength to the straw tip.

According to some embodiments, the first clamp and the second clamp are further shaped to permanently deform the tip portion of the straw to form a first indenting bend line and a second indenting bend line, wherein the first indenting bend line and the second indenting bend line are formed on each side of the rib. The feature of the device disclosed in the embodiment, enables strengthening the pointy tip to help it penetrate a beverage package material.

According to some embodiments, the device may be arranged to simultaneously receive and deform two or three straws in two or three respective support members; and wherein the cutting element may be arranged to cut the two or three straws at the same time.

According to some embodiments, each straw may be pre-bent in a U-shape, wherein each support member may be configured to support one tubular straw in a fixed position. The feature of the device disclosed in the embodiment, enables the device to be used for shaping the tip of the pre-bent straw.

According to some embodiments, the tubular straw may be made of a material comprised in the group consisting of paper, plastic and metal.

According to a second aspect there may be provided a method for shaping the tip of tubular straws in a continuous production, using a device for shaping the tip of tubular straws according to the first aspect, the method comprising the steps of: receiving a drinking straw in one of the plurality of support members; positioning the support member so that the first clamp and the second clamp are receiving a tip portion of a straw; compressing tip portion of a straw; shaping the tip portion of the straw and removing a part of the compressed tip portion of the straw in a predefined angle to the length direction of the straw.

According to some embodiments, the method comprises shaping the straw along the first clamp and the second clamp when they are jointly arranged to guide the cutting element in the predetermined angle in the first slot and the second slot when the first clamp and the second clamp are in the compressed position compressing the tip portion of the straw.

According to some embodiments, the plurality of support members is rotatably attached to the first body, wherein each support member rotates around a support member axis; the method further comprises positioning the tubular straw on the support member; rotating the support member so that the tubular straw is positioned in the correct rotational angle.

According to some embodiments, the method comprises rotating the first body after the tip portion of the straw may be deformed and pressed to receive uncut and un-deformed tubular straw into another support member.

Effects and features of the second aspect are largely analogous to those described above in connection with the first aspect. Embodiments mentioned in relation to the first aspect are largely compatible with the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it may be to be understood that the herein disclosed disclosure may be not limited to the particular component parts of the device described or steps of the methods described since such device and method may vary. It may be also to be understood that the terminology used herein may be for purpose of describing particular embodiments only, and may be not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

Terminology -- The term "tubular straw" may be to be interpreted as a tubular structure such as drinking straw that can be used to penetrate a beverage packaging in order to enable a person to drink said beverage from the packaging.

### Brief descriptions of the drawings

The above objects, as well as additional objects, features and advantages of the present disclosure will be more fully understood by reference to the following illustrative and non-limiting detailed description of example embodiments of the present disclosure, when taken in conjunction with the accompanying drawings.
Figure 1 shows a perspective view of a device for shaping a tip of tubular straw arranged on a tubular straw manufacturing apparatus, according to an embodiment of the present disclosure.
Figure 2A and 2B respectively shows a side view and a front view, respectively, of the tip of tubular straw, shaped according to an embodiment of the present disclosure.
Figure 3A and 3B shows a perspective view of the device for shaping a tip of tubular straw arranged on a tubular straw manufacturing apparatus, according to an embodiment of the present disclosure.
Figure 4 shows the device of Figure 3A and 3B including support members, according to an embodiment of the present disclosure.
Figure 5A shows a perspective view of the support member, according to an embodiment of the present disclosure.
Figure 5B shows an assembled view of the support member on the device, according to an embodiment of the present disclosure.
Figure 6 shows rotation of the straw on the support member, according to an embodiment of the present disclosure.
Figure 7 illustrates first and second clamps used for clamping a tubular straw, according to an embodiment of the present disclosure.
Figure 8 shows a flow chart representing a method according to the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

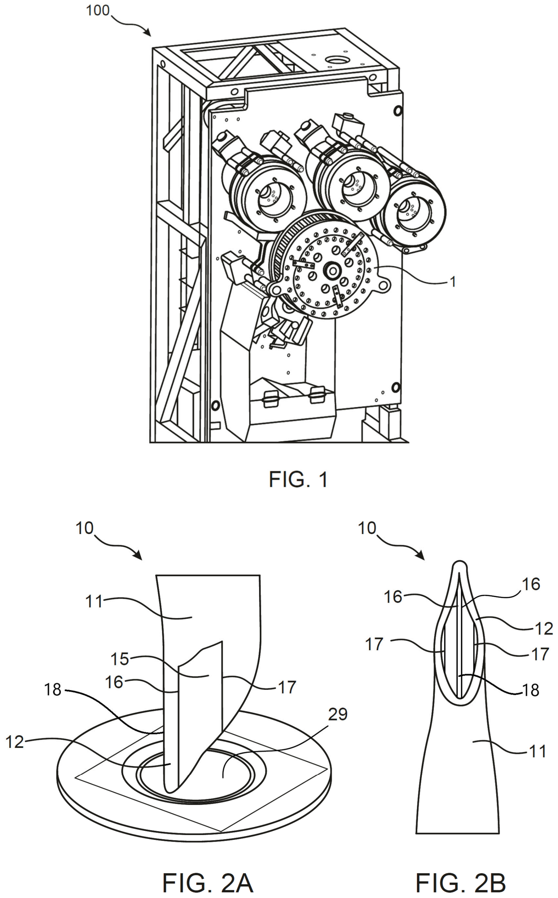

The first aspect of this disclosure as seen in FIG 1 shows a device 1 for shaping the tip 11 of tubular straws 10 (such as a drinking straw) in a continuous production. As shown in FIG 1, the device 1 may be assembled in a manufacturing apparatus 100 to enable continuous production of the tubular straw 10 having a tip shape that enhances the rigidity of the straw 10. Further, the device 1 may be arranged on said apparatus 100 such that the production, shaping and packaging of the tubular straw 10 can be performed in a sequential and continuous production process. However, in an alternate embodiment, the device can be assembled such that it may work in tandem with at least one of said process or may work independently from the other process. The device 1 may be configured to shape the tip 11 to create a rib 15 and a tip portion 12. The rib 15 is defined by two indented bend lines 16, 17 shaped by the first clamp 31 and the second clamp 32. Further, as seen in Fig 2A and 2B the tip 11 may be shaped by the device 1 to form a defined profile having said rib 15 and a cut at the tip portion 12. The profile of the tip 11 created using the device enables the straw to penetrate the beverage packaging 29 without deforming the tip portion 12 of the straw 10. In an embodiment of the present invention, the straw 10 whose tip needs to be shaped may be pre-bent in a U-shape and made of a material comprised in the group consisting of paper, plastic and metal, preferably paper.

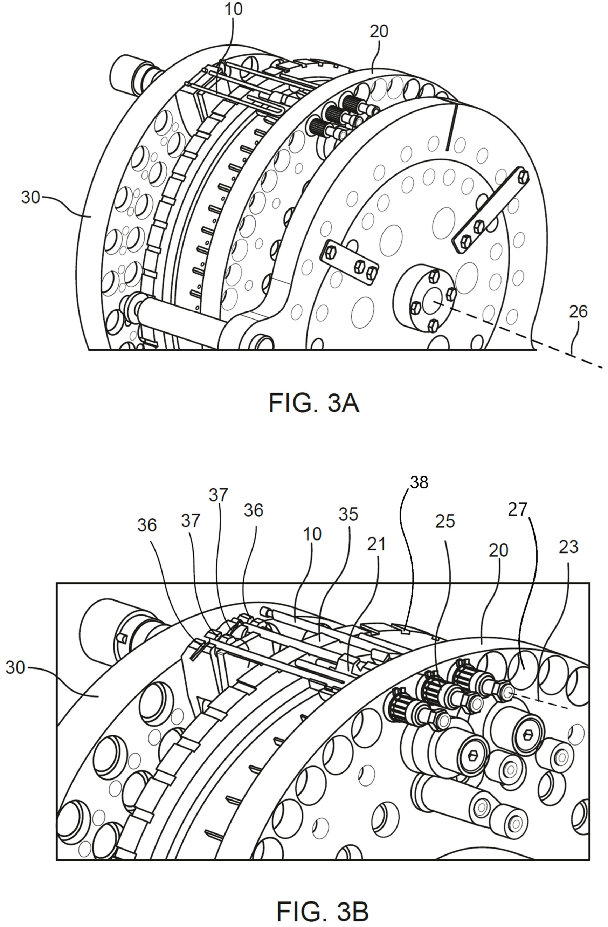

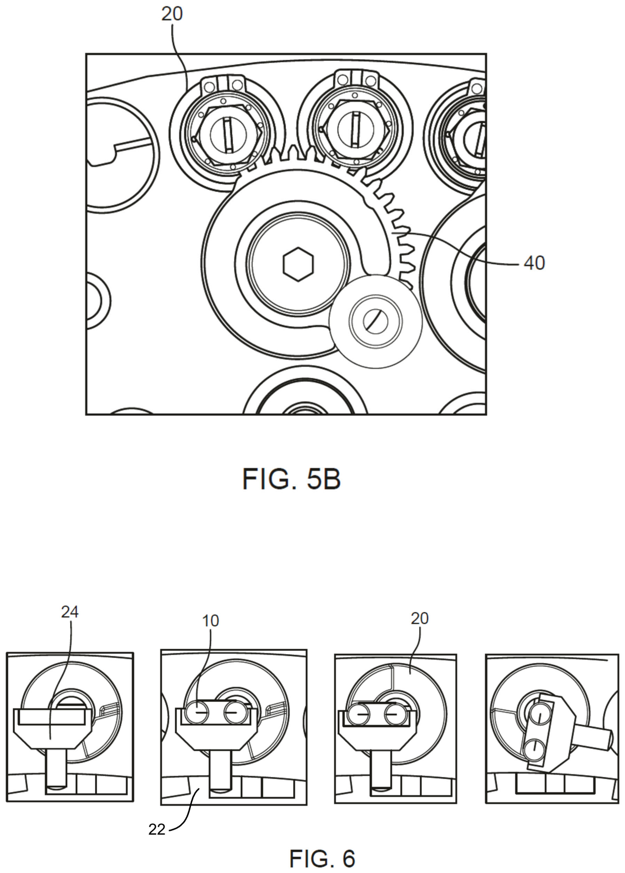

FIG 3A shows a device 1 according to some of the embodiments of the present invention. The device 1 of the present invention shown in FIG 3A comprises a first body 20 that may be cylindrical and arranged to rotate around a rotation axis 26. The first body 20 may generally be made of metal and may further comprise provisions for assembling various parts on the first body. Further, the first body 20 may be assembled on a spindle or shaft that may be further connected to a rotating means. As shown in FIG 3B, a plurality of support members 21 is attached to the first body 20. The support members 21 according to the embodiments of the present invention may be arranged in a hole 27 provided on the first body 20 such that the support member 21 partially passes through the first body 20. Further, the plurality of support members 21 arranged in the plurality of the holes 27 may be configured to be attached to the first body 20. A stopper 22 may be located on the first body and configured to have a shape to avoid the support member 21 rotating to counter direction, for instance clockwise direction, compared to the intended rotation direction of the support member 21 according to Fig. 6.

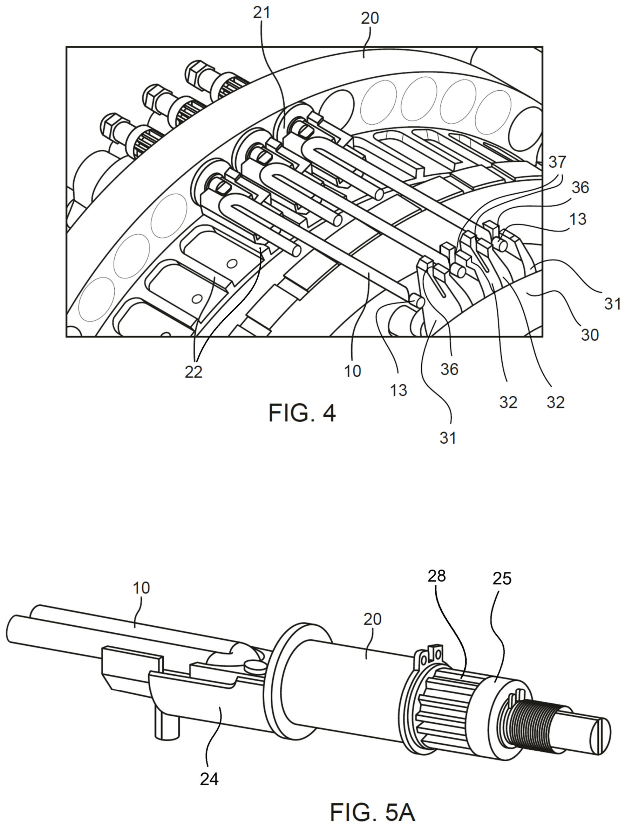

As shown in FIG 4, the support member 21 may be configured to receive the u-bent portion of the tubular straw 10 and support one tubular straw 10 in a fixed position. The support member 21 as shown in FIG 5A may comprise of two portions, a first portion 24 and a second portion 25. As discussed earlier the support member 21 may be partially passes through the first body 20 such that the first portion 24 may be located one side of the first body 20 and the second portion 25 remains on the other side of the first body 20. In addition, the second portion may comprise engaging means 28 that may be configured to mate with a driving means 40 (as shown in FIG 5B). Further, as seen in the FIG 6, the plurality of support members 21 is rotatably attached to the first body 20, such that each support member 21 may be arranged to rotate around a support member axis 23. The tubular section of a U-bend straw 10 that has the tip portion 12 to be shaped is positioned concentrically with the support member axis 23 on the first portion 24 of the support member 21 so that the tubular section may be rotated in counterclockwise direction when the support member 21 is rotated by the driving means 40 to move the straw 10 into a position. In an embodiment of the invention, the support member 21 may be rotated 0-110 degrees to enable desired cutting orientation of the tip 11 of the tubular straw 10.

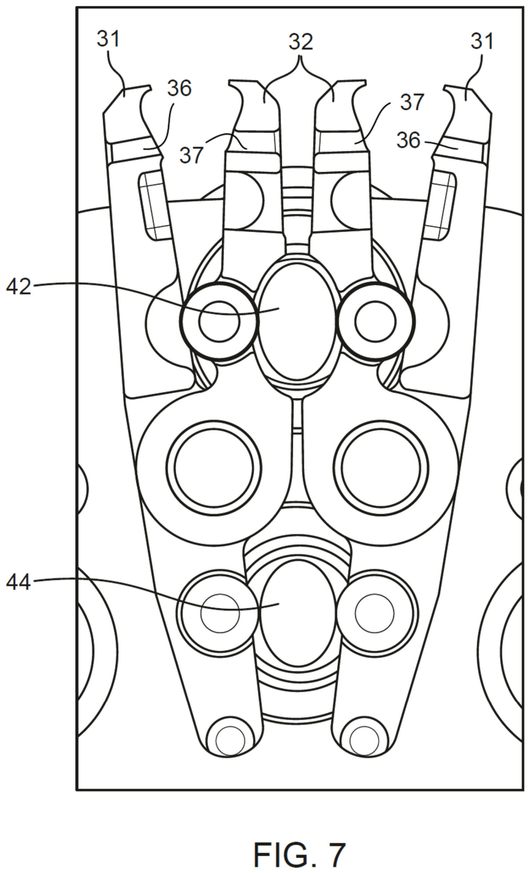

The device further comprises a second body 30 (shown in FIG 3A and 3B) that may be arranged parallel to the first body 20 and rotate around a rotation axis that may be same with the rotation axis 26. The second body may be configured to rotate in tandem with the first body so the device 1 rotates around said axis. As shown in Fig 7, the second body 30 may comprise a first clamp 31 and a second clamp 32 for receiving the straw 10. Further, the first clamp 31 and the second clamp 32 may be configured to compress a tip portion 12 of a straw 10. The clamping action can be achieved as synchronized with the rotation of the device 1 around the rotation axis 26. To do this, a first cam 42 and a second cam 44 can be used to move or rotate the first clamp 31 and the second clamp 32 in connection with the rotation mechanism of the support member 21, preferably mechanically. The device 1 further comprises a knife (not shown in figures) for cutting and removing a part (13) of the compressed tip portion 12 of the straw 10. The knife may be arranged to cut the straw 10 in dedicated slots 36, 37 provided in the first clamp 31 and second clamp 32. The slots 36, 37 on the respective clamps 31 and 32 may be defined such that the knife cuts the tip portion 12 of the straw 10 in a predefined angle along the length direction of the straw 10. Further, as shown in FIG 7, the first clamp 31 comprises a first slot 36 and the second clamp 32 comprises a second slot 37. As disclosed earlier, the first slot 36 and the second slot 37 may be jointly arranged to allow the knife to cut in the predetermined angle when the first slot 36 and the second slot 37 are in the compressed position compressing the tip portion 12 of the straw 10. However, in some embodiment of the invention the angle of knife may be provided at an oblique angle with respect to an axis of the straw 10. The predefined angle of the knife may range between 30-60 degrees depending on the requirement. The knife may be attached to an adjustable mechanism that allows the angle to be set and locked between 30-60 degrees, for instance 45 degrees, ensuring precision cutting of the tip portion 12.

In an embodiment of the invention, the first clamp 31 and the second clamp 32 are arranged to compress and permanently deform the tip portion 12 of the straw 10. For instance, the first clamp 31 and the second clamp 32 may deform the tip portion 12 by applying pressure on the tip portion 12 of the tubular straw 10. This pressure may create a bending line 18 such that the pointed tip of said tip portion 12 piercing the package 29 may be located on the bending line 18 to increase stiffness of the tip portion 12, for instance like only to increase stiffness of the tip portion 12. Further, the first clamp 31 and the second clamp 32 are shaped to permanently deform the tip portion 12 of the straw 10 so that the straw may be provided with one rib 15 defined by bend lines (Shown in FIG 2A). Accordingly, the rib 15 may be formed by a first indenting bend line 16 and a second indenting bend line 17, such the first indenting bend line 16 and the second indenting bend line 17 are formed on each side of the rib. The rib 15 defined by said bending line 16 and 17 provide strength to the tip 11 of the straw 10.

In some embodiments of the invention, the device 1 may be arranged to simultaneously receive and deform multiple straws 10 for example two or three straws in two or three respective support members 21. Further, multiple knives may be arranged to cut said straws 10 at the same time. In some embodiment of the invention, the device may further comprise a disc 35 arranged in between the first body 20 and the second body 30 (Shown in FIG 3A and 3B). The disc 35 may be configured to rotate in tandem with the first body 20 and the second body 30. Further, the disc 35 may include recesses 38 to support the straw 10.

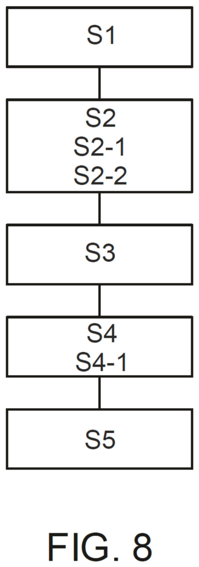

The second aspect of this disclosure shown in FIG 8 discloses a method for shaping the tip 11 of tubular straws 10 in a continuous production, using a device 1 for shaping the tip 11 of tubular straws 10. The method comprising the steps of receiving S1 a tubular 10 straw in one of the plurality of support members 21. As disclosed earlier the support member 21 may comprise a first portion 24 and second portion 25. The straw 10 may be then received in the first portion 24 of the support member 21. Upon receiving the straw 10 the support member 21 may be positioned S2 such that the first clamp 31 and the second clamp 32 receive a tip portion 12 of a straw 10. The plurality of support members 21 may be rotatably attached to the first body 20, such that each support member 21 rotates around a support member axis 23. The method further comprises positioning S2-1 the tubular straw 10 on the support member 21 and rotating S2-2 the support member 21 so that the tubular straw may be moved at least partly radially to move the straw 10 into an angular position while being between the first clamp 31 and the second clamp 32. The tip portion 12 of a straw 10 may be subsequently compressed S3 by the first clamp 31 and second clamp 32. In step S4 of the method of present invention a part (13) of the compressed tip portion 12 of the straw 10 may be removed using the knife in a predefined angle along the length direction of the straw 10 to create a pointed tip shown in FIGS. 2A and 2B.

In one embodiment of the present invention, the method comprises shaping S4-1 the straw along the first clamp 31 and the second clamp 32 when the clamps 31, 32 are jointly arranged and guiding the knife in the first slot (36) and the second slot (37) in the predetermined angle. The knife may be guided to cut the straw when the first slot 36 and the second slot 37 are in the compressed position compressing the tip portion 12 of the straw 10.

The person skilled in the art realizes that the present disclosure may be not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

### List of references

- 1: Device
- 10: Tubular straw
- 11: Tip of tubular straw
- 12: Tip portion
- 13: Removed part
- 15: Rib
- 16: First indented bend line
- 17: Second indented bend line
- 18: Bending line
- 20: First body
- 21: Support member
- 22: Stopper
- 23: Support member axis
- 24: First portion
- 25: Second portion
- 26: Rotation axis
- 27: Hole
- 28: Engaging means
- 29: Beverage packaging
- 30: Second body
- 31: First clamp
- 32: Second clamp
- 35: Disc
- 36: First slot
- 37: Second slot
- 38: Recess
- 40: Driving means
- 42: First cam
- 44: Second cam
- 100: Manufacturing apparatus

## Claims

1. A device (1) for shaping the tip (11) of tubular straws (10) in a continuous production, the device comprising:
a first body (20) that may be substantially cylindrical and arranged to rotate around a rotation axis (26);
a plurality of support members (21), wherein each support member may be configured to support one tubular straw (10) in a fixed position, wherein the plurality of support members (21) is attached to the first body (20);
a second body (30) comprising a first clamp (31) and a second clamp (32) for receiving, compressing and shaping a tip portion (12) of a straw (10); and
a cutting element for removing a part (13) of the compressed tip portion (12) of the straw (10), wherein the cutting element may be arranged to cut the tip portion (12) of the straw (10) in a predefined angle to the length direction of the straw (10).

2. The device according to claim 1, wherein the first clamp (31) comprises a first slot (36) and the second clamp (32) comprises a second slot (37), wherein the first slot (36) and the second slot (37) are jointly arranged to allow the cutting element to cut in the predetermined angle when the first slot (36) and the second slot (37) are in the compressed position compressing the tip portion (12) of the straw (10).

3. The device according to claim 1 or claim 2, wherein angle may be 30-60 degrees.

4. The device according to any one of the preceding claims, wherein the plurality of support members (21) is rotatably attached to the first body (20), wherein each support member (21) may be arranged to rotate around a support member axis (23).

5. The device according to claim 4, wherein the support member (21) may be rotated 0-110 degrees.

6. The device according to any one of the preceding claims, wherein the first clamp (31) and the second clamp (32) are arranged to compress and permanently deform the tip portion (12) of the straw (10).

7. The device according to any one of the preceding claims, wherein the first clamp (31) and the second clamp (32) are shaped to permanently deform the tip portion (12) of the straw (10) so that the straw may be provided with one rib (15) defined by a bend line (16, 17).

8. The device according to claim 7, wherein the first the clamp (31) and the second clamp (32) are further shaped to permanently deform the tip portion (12) of the straw (10) to form a first indenting bend line (16) and a second indenting bend line (17), wherein the first indenting bend line (16) and the second indenting bend line (17) are formed on each side of the rib.

9. The device according to any one of the preceding claims, wherein the device is arranged to simultaneously receive and deform two or three straws in two or three respective support members (21); and wherein the cutting element may be arranged to cut the two or three straws at the same time.

10. The device according to any one of the preceding claims, wherein each straw (10) may be pre-bent in a U-shape, wherein each support member (21) may be configured to support one tubular straw (10) in a fixed position.

11. The device according to any one of the preceding claims, wherein the tubular straw may be made of a material comprised in the group consisting of paper, plastic and metal.

12. A method for shaping the tip (11) of tubular straws (10) in a continuous production, using a device (1) for shaping the tip (11) of tubular straws (10) according to any one of the preceding claims, the method comprising the steps of:
receiving (S1) a tubular straw (10) in one of the plurality of support members (21);
positioning (S2) the support member (21) so that the first clamp (31) and the second clamp (32) are receiving a tip portion (12) of a straw (10);
compressing (S3) tip portion (12) of a straw (10);
shaping (S4) the tip portion (12) of the straw (10); and
removing a part (13) of the compressed tip portion (12) of the straw (10) in a predefined angle to the length direction of the straw (10).

13. The method according to claim 12, further comprising shaping (S4-1) the straw along the first clamp (31) and the second clamp (32) when they are jointly arranged and guiding the cutting element in the first slot (36) and the second slot (37) in the predetermined angle to remove the part (13) when the first clamp (31) and the second clamp (32) are in the compressed position compressing the tip portion (12) of the straw (10).

14. The method according to claim 12 or 13, wherein the plurality of support members (21) is rotatably attached to the first body (20), wherein each support member (21) rotates around a support member axis (23); the method further comprising
positioning (S2-1) the tubular straw (10) on the support member (21); and
rotating (S2-2) the support member (21) so that the tip portion (12) of the tubular straw (10) is positioned in a rotational angle before removing the part (13).
